# EUROPÄISCHE PATENTSCHRIFT

(11) **EP 1 393 150 B1**
(45) Veröffentlichungstag und Bekanntmachung des Hinweises auf die Patenterteilung: **20.01.2010**
(21) Anmeldenummer: 02748558.0
(22) Anmeldetag: 28.05.2002
(51) Int. Cl.: G06F 1/18

(54) **COMPUTER**
COMPUTER
ORDINATEUR

(30) Priorität: 06.06.2001 DE 10127335
(43) Veröffentlichungstag der Anmeldung: 03.03.2004
(73) Patentinhaber: Fujitsu Siemens Computers GmbH, 80807 München (DE)
(72) Erfinder: SCHMID, Michael, 89407 Dillingen (DE); SCHERER, August, 86424 Dinkelscherben (DE)
(74) Vertreter: Epping - Hermann - Fischer
(86) Internationale Anmeldenummer: PCT/DE2002/001965
(87) Internationale Veröffentlichungsnummer: WO 2002/099611

(56) Entgegenhaltungen:
- DE-U- 9 211 360
- GB-A- 2 190 793
- ANONYMOUS: "Detachable Plate for Mounting Electromechanical Devices, Lock and Indicator and Bezel Assemblies" IBM TECHNICAL DISCLOSURE BULLETIN, Bd. 29, Nr. 10, 1. März 1987 (1987-03-01), Seiten 4351-4358, XP001092747 New York, US

## Beschreibung

Die Erfindung betrifft einen Computer mit einem Gehäuse, dessen Frontseite mit einer Frontblende verkleidet ist und bei dem über die Frontseite PC-Komponenten in den Computer einschiebbar und an einem Einbaukäfig im Computer festlegbar sind und die Festlegung mittels an die.PC-Komponenten seitlich ansteckbarer Halteschienen erfolgt.

Die Festlegung von PC-Komponenten beziehungsweise Laufwerken über seitlich ansteckbare Halteschienen ist zum Beispiel aus der DE 299 14 768 U1 bekannt.

Diese Festlegung hat gegenüber dem Verschrauben der Komponente mit dem Einbaukäfig den Vorteil, daß die Montage wesentlich schneller erfolgen kann und auch keine Schrauben in das Innere des Computers fallen können und eventuell dort Kurzschlüsse verursachen können. Ein weiterer Vorteil ist die Reduzierung der Körperschallübertragung im Vergleich zur Festlegung durch Verschrauben.

Die Standard-PC-Komponenten beziehungsweise Laufwerke sind mit einer Blende versehen und die ansteckbaren Halteschienen stehen seitlich über diese Blende über und werden bei der Montage der PC-Komponenten in entsprechenden Aufnahmen im Einbaukäfig aufgenommen.

Um ein ästhetisches Bild zu erhalten, sollen die Halteschienen von Außen nicht gesehen werden und zwischen den Frontblenden der PC-Komponenten und der Frontblende des Computers soll beidseitig ein gleichmäßiger dünner Spalt nach der Montage entstehen.

Daher muß bei der Montage eines Laufwerks mit Halteschienen nach dem Stand der Technik stets die Frontblende vorher demontiert werden und nach der Montage der PC-Komponenten wieder aufgesetzt werden.

Der Erfindung liegt daher die Aufgabe zugrunde, die gattungsgemäße Festlegung der PC-Komponenten so weiter zu entwickeln, daß eine Demontage der Frontblende entfallen kann.

Diese Aufgabe wird erfindungsgemäß dadurch gelöst, daß die Frontblende seitlich der aufzunehmenden PC-Komponenten Aussparungen aufweist, so daß die PC-Komponenten mit angesteckten Halteschienen durch die Frontblende hindurch in den Computer einschiebbar sind.

Durch die Aussparungen in der Frontblende kann somit sowohl beim Einsetzen wie auch beim Ausbau der PC-Komponenten auf eine Demontage der Frontblende verzichtet werden.

Um ein ästhetisches Bild zu erhalten, sind die Halteschienen vorzugsweise an demjenigen Ende, welches bei montierter PC-Komponente zur Frontseite des Computers zeigt, mit einer Abdeckung versehen, welche bei montierter PC-Komponente die Aussparung in der Frontblende verschließt. Die Abdeckung ist vorzugsweise so dimensioniert, daß sie bei montierter PC-Komponente eine bündige Fläche mit der Oberfläche der Frontblende bildet.

Gemäß einer bevorzugten Ausführungsform weist die Abdeckung in Richtung Frontblende vorspringende Fixierzapfen auf, welche bei der Montage der PC-Komponente in entsprechende Öffnungen in der Frontblende eingesteckt werden.

Die Fixierzapfen dienen zum einen zur Festlegung der Abdekkung sowie der Halteschiene an der Frontblende bringen den weiteren Vorteil mit sich, daß das Laufwerk exakt in der Frontblende ausgerichtet ist und sich somit sowohl seitlich der Laufwerksblende als auch oberhalb und unterhalb der Laufwerksblende einheitliche Abstände zur Frontblende beziehungsweise zu den benachbarten Laufwerken ergeben. Für ein hochqualitatives anspruchsvolles Aussehen ist dies von großer Bedeutung, da keilförmige Spalten von den Käufern als unästhetisch und unprofessionell eingestuft werden und dies somit dem gesamten Rechner ein schlechtes Image verleiht.

Die Problematik der keilförmigen Spalten tritt insbesondere bei schweren PC-Komponenten sowie bei wannenförmigen Gehäusen auf.

Bei Gehäuse mit Wannenform ist das Innere nur von der Frontseite von einer Breitseite zugänglich. Daher erfolgte herkömmlich die Verschraubung der PC-Komponenten mit dem Einbaukäfig nur von der zugänglichen Breitseite, so daß die PC-Komponenten stets auf der freien Seite etwas hinunterhingen und sich daher an der Frontseite des Computers ein keilförmiger Stpalt zur Frontblende sowie zu den benachbarten leichteren Laufwerken ergab.

Weitere vorteilhafte Ausgestaltungen der Erfindung sind in den Unteransprüchen sowie in der nachfolgenden Figurenbeschreibung offenbart.

Anhand eines in den Zeichnungen dargestellten Ausführungsbeispieles wird die Erfindung nun näher erläutert. In den Zeichnungen zeigen:
- Figur 1: eine Schrägansicht eines Computers mit offener Breitseite und einem halb montierten Laufwerk,
- Figur 2: eine Halteschiene in Schrägansicht und
- Figur 3: die Frontseite des erfindungsgemäßen Computers.

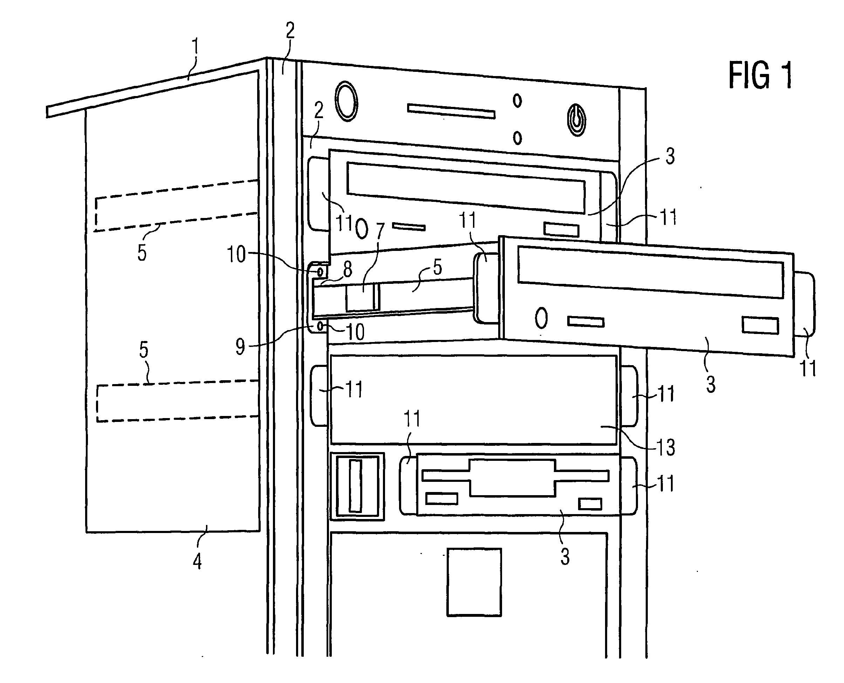

Figur 1 zeigt einen Computer mit einem Gehäuse 1 in Towerform, dessen Frontseite mit einer Frontblende 2 verkleidet ist. In den Computer sind über die Frontseite PC-Komponenten 3 im dargestellten Ausführungsbeispiel 2 CD-ROM-Laufwerke und ein 3 1/2" Diskettenlaufwerk eingesetzt.

Das mittlere CD-ROM-Laufwerk ist lediglich halb montiert dargestellt.

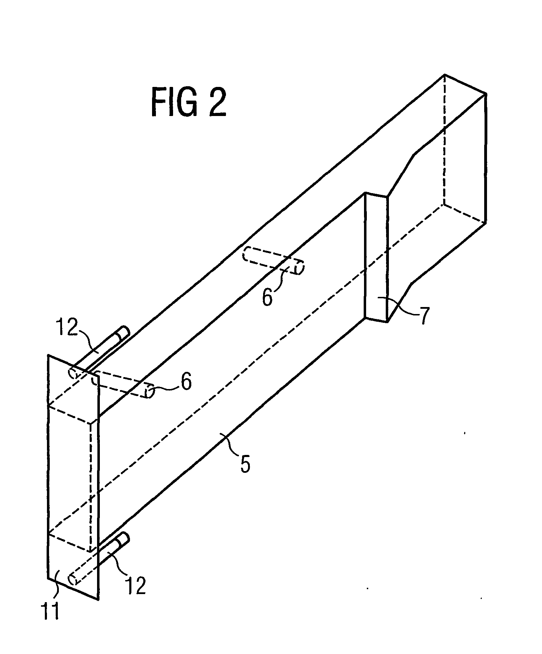

Der Computer weist wie die meisten PCs einen Einbaukäfig 4 auf, an welchem die PC-Komponenten 3 festgelegt werden. Zur Festlegung sind an die PC-Komponenten 3 seitlich Halteschienen 5 angesteckt, wobei diese wie in Figur 2 dargestellt zum Laufwerk hin vorspringende Zapfen 6 aufweisen, welche in die Standardgewindebohrungen seitlich der Standardlaufwerke beziehungsweise PC-Komponenten 3 eingreifen.

Die Halteschienen 5 werden im Einbaukäfig 4 in entsprechende Aufnahmen eingeschoben.

Zur Festlegung im Einbaukäfig 4 weisen die Halteschienen 5 einen nach außen vorspringenden Rasthaken 7 auf, welcher im Einbaukäfig 4 mit einer entsprechenden Gegenrast zusammenwirkt.

Um zur Montage der PC-Komponenten 3 die Demontage der Frontblende 2 zu verhindern, weist diese erfindungsgemäß seitlich der aufzunehmenden PC-Komponenten 3 Aussparungen 8 auf, so daß die PC-Komponenten 3 wie in Figur 1 dargestellt mit angesteckten Halteschienen 5 durch die Frontblende 2 hindurch in den Einbaukäfig 4 eingeschoben werden können.

Die Aussparung 8 ist von einem bezüglich der Oberfläche der Frontblende leicht eingesenkten Bereich 9 umgeben, in welchem zwei Öffnungen 10 oberhalb sowie unterhalb der Aussparung 8 vorgesehen sind.

Wie in Figur 2 dargestellt, ist die Halteschiene 5 an demjenigen Ende, welches bei erfolgter Montage der PC-Komponente zur Frontseite des Computers hin zeigt, mit einer Abdeckung 11 versehen, welche bei montierter PC-Komponente 3 die Aussparung 8 sowie den abgesenkten Bereich 9 verschließt.

An der Abdeckung 11 sind zwei nach innen vorspringende Fixierzapfen 12 angebracht, welche bei der Montage der PC-Komponenten 3 in die Öffnungen 10 eingeschoben werden.

Die Fixierzapfen 12 sorgen somit zum einen zur Festlegung der Abdeckung und somit der Halteschienen 5 an der Frontblende 2 und zum anderen dafür, daß die PC-Komponente 3 exakt gegenüber der Frontblende 2 ausgerichtet ist und sich somit gleichmäßige Spalten seitlich der PC-Komponente 3 sowie auch oberhalb und unterhalb zu den benachbarten PC-Komponenten ergeben.

Die Fixierzapfen 12 haben den weiteren Vorteil, daß an denjenigen Einbauplätzen im Computer, an welchen bisher noch keine PC-Komponente aufgenommen ist, die Halteschienen 5 eingeschoben werden können und über die Fixierzapfen 12 der Frontblende 2 festgelegt sind.

Im Einbauplatz Zwischen dem unteren CD-ROM-Laufwerk und dem 3 1/2" Diskettenlaufwerk ist dies dargestellt, wobei die Frontseite über eine Laufwerksblindblende 13 verschlossen ist.

Dies hat den Vorteil, daß der Kunde beim Kauf eines Standardlaufwerks lediglich die Blindblende 13 entfernen muß und die beiden Halteschienen 5 aus dem freien Einbauplatz entnehmen kann. Diese muß er lediglich an seinem Standardlaufwerk befestigen und kann dieses danach wieder einschieben in den freien Einbauplatz einschieben.

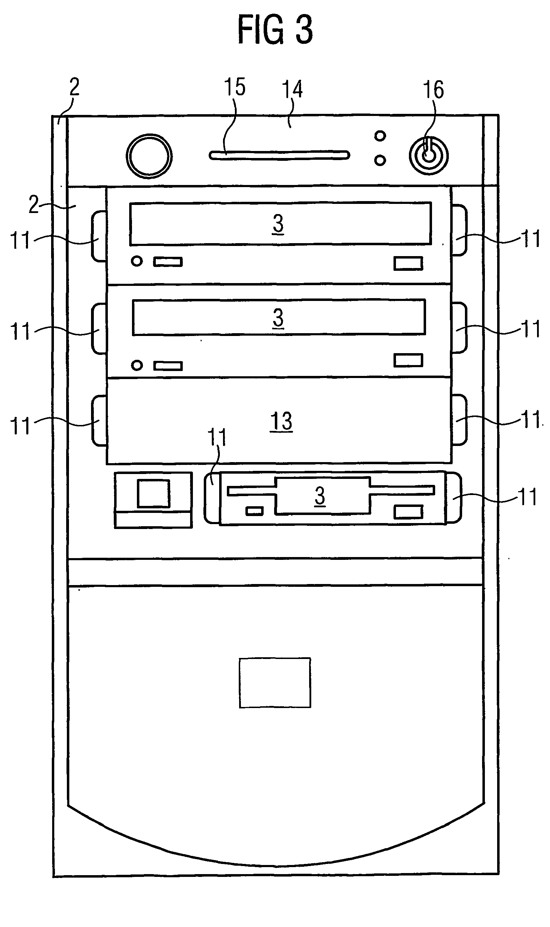

Figur 3 zeigt die Frontansicht des Computers gemäß Figur 1, wobei bei dem dargestellten Ausführungsbeispiel in die Frontblende 2 an der Oberseite eine Verkleidung 14 für einen ID-Card-Reader sowie einem Schloß zum Absperren des Computers integriert ist.

### Bezugszeichenliste

- 1: Gehäuse
- 2: Frontblende
- 3: PC-Komponente
- 4: Einbaukäfig
- 5: Halteschienen
- 6: Zapfen
- 7: Rasthaken
- 8: Aussparung
- 9: Abgesenkter Bereich
- 10: Öffnung
- 11: Abdeckung
- 12: Fixierzapfen
- 13: Blindblende
- 14: Verkleidung
- 15: ID-Card-Reader
- 16: Schloß

## Patentansprüche

1. Computer mit einem Gehäuse (1), dessen Frontseite mit einer Frontblende (2) verkleidet ist und bei dem über die Frontseite PC-Komponenten (3) in den Computer einschiebbar und an einem Einbaukäfig (4) im Computer festlegbar sind und die Festlegung mittels an die PC-Komponenten (3) seitlich ansteckbarer Halteschienen (5) erfolgt,
**dadurch gekennzeichnet, daß**
die Frontblende (2) seitlich der aufzunehmenden PC-Komponenten (3) Aussparungen (8) aufweist, so daß die PC-Komponenten (3) mit angesteckten Halteschienen (5) durch die Frontblende (2) hindurch in den Computer einschiebbar sind.

2. Computer nach Anspruch 1,
**dadurch gekennzeichnet, daß**
die Halteschienen (5) an demjenigen Ende, welches bei montierter PC-Komponente zur Frontseite des Computers hin zeigt, eine Abdeckung (11) aufweisen, welche bei montierter PC-Komponente (3) die Aussparung (8) in der Frontblende (2) verschließt.

3. Computer nach Anspruch 2,
**dadurch gekennzeichnet, daß**
die Abdeckung (11) in Richtung Frontblende (2) vorspringende Fixierzapfen (12) aufweist, welche bei der Montage der PC-Komponente (3) in entsprechende Öffnungen (10) in der Frontblende (2) einsteckbar sind.

4. Computer nach Anspruch 3,
**dadurch gekennzeichnet, daß**
die Halteschienen (5) in Richtung aufzunehmender PC-Komponente vorspringende Zapfen (6) aufweisen, die beim Anstecken an die PC-Komponente (3) in die seitlichen Standardgewindebohrungen eingeschoben werden.

5. Computer nach einem der Ansprüche 1 bis 4,
**dadurch gekennzeichnet, daß**
die Halteschienen (5) einen Rasthaken (7) aufweisen, welcher beim Einschieben der PC-Komponente (3) mit einer entsprechenden Gegenrast im Einbaukäfig (4) zusammenwirkt.

6. Computer nach einem der Ansprüche 1 bis 5,
**dadurch gekennzeichnet, daß**
das Innere des Computergehäuses (1) nur von der Frontseite und einer Breitseite des Computers zugänglich ist.

## Claims

1. Computer having a housing (1) whose front side is clad with a front panel (2) and in which PC components (3) can be inserted into the computer via the front side and can be fixed to a mounting cage (4) in the computer, and the fixing operation is carried out using retaining rails (5) which can be laterally affixed to the PC components (3),
**characterized in that**
the front panel (2) has recesses (8) to the side of the PC components (3) to be accommodated, with the result that the PC components (3) with affixed retaining rails (5) can be inserted into the computer through the front panel (2).

2. Computer according to Claim 1,
**characterized in that**
the retaining rails (5) have, at that end which points towards the front side of the computer when the PC component has been installed, a cover (11) which closes the recess (8) in the front panel (2) when the PC component (3) has been installed.

3. Computer according to Claim 2,
**characterized in that**
the cover (11) has fixing pins (12) which project in the direction of the front panel (2) and can be inserted into corresponding openings (10) in the front panel (2) when installing the PC component (3).

4. Computer according to Claim 3,
**characterized in that**
the retaining rails (5) have pins (6) which project in the direction of a PC component to be accommodated and are inserted into the lateral standard threaded holes when being affixed to the PC component (3).

5. Computer according to one of Claims 1 to 4,
**characterized in that**
the retaining rails (5) have a latching hook (7) which interacts with a corresponding mating latch in the mounting cage (4) when the PC component (3) is being inserted.

6. Computer according to one of Claims 1 to 5,
**characterized in that**
the interior of the computer housing (1) is accessible only from the front side and a broadside of the computer.

## Revendications

1. Ordinateur comprenant un boîtier (1), dont le côté avant est revêtu d'un bandeau avant (2) et dans lequel on peut insérer dans l'ordinateur, par le côté avant, des composants d'ordinateur (3) qui peuvent être fixés sur une cage de montage (4) dans l'ordinateur, la fixation s'effectuant au moyen de rails de fixation (5) pouvant être enfichés latéralement sur les composants d'ordinateur (3),
**caractérisé en ce que**
le bandeau avant (2) présente des évidements (8) latéralement aux composants d'ordinateur (3) à recevoir, de sorte que les composants d'ordinateur (3) puissent être enfoncés avec les rails de fixation enfichés (5) à travers le bandeau avant (2) dans l'ordinateur.

2. Ordinateur selon la revendication 1,
**caractérisé en ce que**
les rails de fixation (5) présentent, à l'extrémité qui est tournée vers le côté avant de l'ordinateur lorsque le composant d'ordinateur est monté, un recouvrement (11) qui ferme l'évidement (8) dans le bandeau avant (2) lorsque le composant d'ordinateur (3) est monté.

3. Ordinateur selon la revendication 2,
**caractérisé en ce que**
le recouvrement (11) présente des tourillons de fixation (12) saillant dans la direction du bandeau avant (2), qui peuvent être enfichés dans des ouvertures correspondantes (10) dans le bandeau avant (2) lors du montage du composant d'ordinateur (3).

4. Ordinateur selon la revendication 3,
**caractérisé en ce que**
les rails de fixation (5) présentent des tourillons (6) saillant dans la direction du composant d'ordinateur à recevoir, qui sont enfoncés lors de l'enfichage sur le composant d'ordinateur (3) dans les alésages filetés standards latéraux.

5. Ordinateur selon l'une quelconque des revendications 1 à 4,
**caractérisé en ce que**
les rails de fixation (5) présentent un crochet d'encliquetage (7) qui coopère avec un contre-cliquet correspondant dans la cage de montage (4) lors de l'insertion du composant d'ordinateur (3).

6. Ordinateur selon l'une quelconque des revendications 1 à 5,
**caractérisé en ce que**
l'intérieur du boîtier d'ordinateur (1) est seulement accessible depuis le côté avant et un côté large de l'ordinateur.
